# FASCICULE DE BREVET EUROPEEN

(11) **EP 3 030 407 B1**
(45) Date de publication et mention de la délivrance du brevet: **30.08.2017**
(21) Numéro de dépôt: 14752917.6
(22) Date de dépôt: 26.06.2014
(51) Int. Cl.: B29D 30/06, B29D 30/72, B29C 33/12, B29C 33/42, B29C 35/02, B60C 11/03, B60C 13/02

(54) **MOULE POUR PNEUMATIQUE COMPORTANT UN INSERT ANNULAIRE DEMONTABLE**
FORM FÜR REIFEN MIT ABNEHMBAREM RINGFÖRMIGEM EINSATZ
MOULD FOR TYRE HAVING A REMOVABLE ANNULAR INSERT

(30) Priorité: 05.08.2013 FR 1301879
(43) Date de publication de la demande: 15.06.2016
(73) Titulaire: Compagnie Générale des Etablissements Michelin, 63000 Clermont-Ferrand (FR)
(72) Inventeur: VILLENEUVE, Bernard, F-63040 Clermont-Ferrand Cedex 9 (FR)
(74) Mandataire: Demaure, Pierre-Yves
(86) Numéro de dépôt international: PCT/IB2014/001205
(87) Numéro de publication internationale: WO 2015/019134

(56) Documents cités:
- WO-A1-2013/065552
- DE-A1- 1 729 709
- GB-A- 1 403 030

## Description

### DOMAINE TECHNIQUE DE L'INVENTION

La présente invention concerne les moules pour pneumatiques. Plus particulièrement, elle se rapporte au moulage de protubérances complexes sur les flancs de ces pneumatiques.

### ETAT DE LA TECHNIQUE ANTERIEURE

On connaît des pneumatiques pourvus d'éléments de garniture posés sur les flancs. Par exemple, le document FR1266628 divulgue un pneumatique pour avion décollant à très haute vitesse, conçu pour éviter les projections d'eau et comportant sur au moins un flanc un profilé modifiant la section usuelle, c'est-à-dire ayant une section à peu près triangulaire.

Le document EP1048489 divulgue un pneumatique comportant des bourrelets, des flancs et un sommet comportant une armature de renforcement. Pour dévier le flux d'eau éjecté latéralement par ce pneumatique au cours d'un roulage sur sol recouvert d'eau, on dispose sur au moins un des flancs une protubérance limitée par une paroi supérieure radialement à l'extérieur et une paroi inférieure radialement à l'intérieur. Dans ce document, l'exemple illustré à la figure 3 concerne une protubérance complexe pour laquelle les opérations de moulage/démoulage sont susceptibles de causer un certain nombre de difficultés. En outre, la présence de canaux connectés ensemble de manière à former un coude dans le plan de la figure pour empêcher l'eau de circuler facilement à l'intérieur dudit canal (la paroi limitant chaque canal formant écran), contribue à rendre plus complexe les opérations de moulage/démoulage.

La réalisation de ces protubérances implique des mises en oeuvre coûteuses des éléments des moules prévus pour le moulage et la vulcanisation. En outre, en cas de changement dimensionnel et/ou de profil d'une protubérance, il peut s'avérer nécessaire de changer tout le moule ou au moins une des coquilles, à un coût sensiblement important.

existe donc un besoin de proposer une solution simple et pratique permettant la mise en oeuvre de moules bien adaptés pour les pneumatiques pourvus de telles protubérances.

### EXPOSE DE L'INVENTION

Un premier objet de l'invention consiste à prévoir un moule spécifiquement adapté pour le moulage de pneumatiques pourvus d'au moins une protubérance en zone de flanc.

Un autre objet de l'invention consiste à prévoir un moule pour pneumatique pourvu d'une portion de flanc avec une protubérance d'une forme sensiblement complexe, susceptible de rendre délicate les opérations de démoulage.

Un autre objet de l'invention consiste à prévoir un moule pour pneumatique pourvu d'une portion de flanc avec une protubérance d'une forme donnée, susceptible de changer ou d'évoluer.

Encore un autre objet de l'invention consiste à prévoir un moule pour pneumatique avec protubérance, rendant l'opération de démoulage la plus simple possible.

Encore un autre objet de l'invention consiste à prévoir un moule pour pneumatique avec protubérance, rendant l'opération de démoulage sans risque d'endommager la protubérance.

Pour ce faire, l'invention prévoit un moule pour la vulcanisation et le moulage d'un pneumatique, ce pneumatique comprenant une bande de roulement délimitée par deux flancs dont au moins un est pourvu d'une protubérance complexe, le moule comprenant une couronne destinée au moulage de la bande de roulement du pneumatique et deux coquilles pour le moulage des flancs, le moule comprenant un insert annulaire séparant le moule en au moins deux portions, soit une portion de couronne, et une portion de coquille dans la zone radialement inférieure des flancs, ledit insert comportant deux éléments concentriques adjacents, destinés à mouler ladite protubérance complexe, soit un élément radialement extérieur, associé à la couronne et un élément radialement intérieur, étant associé à la coquille.

Grâce à une telle architecture, le démoulage des pneumatiques comportant un élément protubérant est facilité. En outre, si l'élément protubérant est de forme complexe et/ou est fragile et susceptible d'être endommagé lors d'une opération de démoulage, la présente architecture permet d'effectuer ces opérations en éliminant ou tout au moins en minimisant de tels risques.

Dans un mode de réalisation avantageux, l'insert comprend une rainure concentrique à l'insert, la zone d'interface entre les deux éléments concentriques adjacents cheminant par un des bords de la rainure.

Le fait de prévoir une zone d'ouverture du moule au niveau de la protubérance permet de minimiser, voir d'éviter, les efforts de traction et/ou de cisaillement qui auraient autrement été transmis à la protubérance.

Selon un autre mode de réalisation avantageux, la rainure est pourvue d'un profil avec une zone distale suivie d'une zone plus étroite de connexion entre la protubérance et le flanc du pneumatique.

Grâce aux caractéristiques du moule préalablement décrites, le moule selon l'invention permet de mouler et vulcaniser des éléments complexes et/ou fragiles, comme par exemple une protubérance en forme de « T », connectée au flanc par une zone plus étroite que le reste de la protubérance.

De manière avantageuse, l'élément 6 est mobile radialement extérieurement avec la couronne du moule lors du démoulage.

Au démoulage, grâce au déplacement de la couronne dans la direction radialement extérieure, l'élément 6 est entrainé dans la même direction, contribuant à libérer toute une zone de la protubérance. Dans les exemples illustrés aux figures, la moitié radialement extérieure est libérée.

Egalement de manière avantageuse, l'élément 7 est mobile axialement extérieurement avec une coquille du moule lors du démoulage.

Au démoulage, grâce au déplacement de la coquille dans une direction distincte de celle de couronne, l'élément 7 est entrainé dans la même direction, contribuant à libérer le reste de la protubérance. Dans les exemples illustrés aux figures, la moitié radialement intérieure est libérée.

Selon un mode de réalisation avantageux, l'insert est formé de plusieurs parties d'insert positionnées les unes à la suite des autres pour constituer un anneau.

Une telle configuration permet de faciliter la fabrication de l'insert, et permet d'avoir un insert démontable soit pour interchanger une partie endommagée, pour modifier un élément de marquage du pneumatique, ou pour toute autre raison. L'invention propose ainsi de fabriquer un insert annulaire en plusieurs parties. Ce mode de réalisation permet en outre de faciliter la réalisation de l'insert. En outre, comme chaque partie d'insert présente des dimensions limitées, les ajustements sont facilités. De plus, en cas de modifications de profil et/ou de dimension d'une protubérance sur une portion angulaire limitée du flanc du pneumatique, seules les parties concernées par ces modifications sont remplacées. Il n'est donc pas nécessaire de remplacer l'ensemble de l'insert comme dans l'art antérieur.

Dans un autre mode de réalisation, au moins une partie d'insert est réalisée par frittage laser. Cette partie d'insert comporte tout ou partie de la rainure de l'insert. Le procédé du frittage laser est un procédé qui consiste à construire une pièce couche par couche en superposant successivement des couches de poudre et en fusionnant sélectivement cette poudre. Ce procédé peut être assisté par ordinateur ce qui permet de construire des pièces complexes.

Le frittage laser permet de réaliser avec une très grande précision des formes de moules difficiles à exécuter dans des techniques de mise en forme classiques.

Selon une variante avantageuse, la rainure est interrompue à intervalles réguliers par des projections réparties angulairement le long de la circonférence de l'insert.

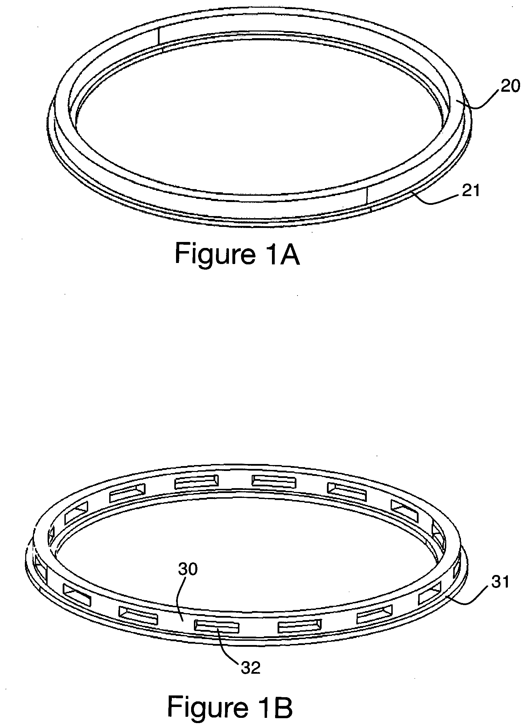

De telles projections permettent par exemple de produire des évidements au niveau de la protubérance, tel que montré dans la protubérance illustrée à titre d'exemple à la figure 1B. Les évidements permettent par exemple de faciliter l'écoulement de l'air autour de la protubérance, et favorise les performances aérodynamiques.

Les projections s'étendent de préférence radialement intérieurement de l'élément 6 vers des fenêtres de formes et dimensions correspondantes prévues sur l'élément 7 en alignement avec les projections.

L'insertion des projections dans les fenêtres correspondantes procure un effet de cisaillement du mélange caoutchoutique au moment de la fermeture du moule, avant la vulcanisation. Compte tenu de la grande précision requise pour les pièces avec emboîtage, celles-ci sont avantageusement réalisées par frittage laser.

Grâce à une telle architecture, le moule selon l'invention permet de séparer les éléments permettant de mouler la protubérance du flanc des autres éléments du flanc tels que le profil général du flanc, le marquage, etc. Ainsi, en cas de modification architecturale ou dimensionnelle de la protubérance, il est possible de changer uniquement l'insert, tout en conservant les autres éléments du moule non impactés par les changements. On obtient une souplesse dans la préparation des moules avec des possibilités d'évolutivité, à des coûts très avantageux. Le seul changement d'un insert peut également permettre des gains de temps et de productivité par rapport à un remplacement de moule complet.

Dans un mode de réalisation particulier, la rainure de l'insert est annulaire.

Dans un autre mode de réalisation, l'insert comprend plusieurs rainures.

Dans un autre mode de réalisation, chaque partie d'insert comporte des surfaces de contact servant à interfacer avec des parties d'insert adjacentes. Au moins deux parties d'insert sont reliées entre elles au niveau d'une zone de leur surface de contact, cette liaison étant apte à être brisée en vue de désolidariser les deux parties d'insert.

En liant tout ou partie des différentes parties d'insert entre elles, il est possible de positionner en une seule fois l'ensemble de l'insert annulaire dans le moule.

Lors d'une opération de changement d'une des parties d'insert, il suffit alors de briser les liaisons la retenant aux autres parties d'insert pour l'extraire du moule et la remplacer par une autre partie d'insert idoine.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- Les figures 1A et 1B représentent des exemples de protubérances complexes pour flancs de pneumatiques;
- la figure 2 représente schématiquement une vue en coupe dans un plan méridien d'un premier exemple d'une partie d'un moule conforme à l'invention ;
- la figure 3 représente schématiquement une vue en coupe dans un plan méridien d'un deuxième exemple d'une partie d'un moule conforme à l'invention ;
- la figure 4 représente schématiquement une vue en perspective d'un exemple d'insert annulaire adapté au moule de la figure 2 et réalisé en plusieurs parties;
- la figure 5 montre schématiquement une des parties de l'insert de la figure 4 ;
- la figure 6 montre schématiquement une des parties de l'insert de la figure 4 avec les deux portions séparées.

Dans la description qui va suivre, des éléments sensiblement identiques ou similaires seront désignés par des références identiques.

### DESCRIPTION DETAILLEE DE L'INVENTION

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « bourrelet » d'un pneumatique, on entend une partie du pneumatique destinée à prendre assise sur une jante de roue.

Par « moule », on entend un ensemble d'éléments de moule séparés qui, par rapprochement relatif, permettent de délimiter un espace de moulage toroïdal 20 pour la vulcanisation et le moulage d'un pneumatique.

Par « plan équatorial », on entend un plan perpendiculaire à un axe de révolution du moule et séparant ce moule en deux 1/2 moules identiques.

Par « plan méridien », on entend un plan contenant l'axe de révolution du moule.

Par « protubérance complexe », on entend une protubérance en au moins deux parties, avec discontinuité entre les parties.

Les figures 1A et 1B illustrent des exemples de protubérances complexes de pneumatiques. L'exemple de la figure 1A consiste en une protubérance avec deux profilés sensiblement perpendiculaires 20 et 21, connectés entre eux en forme de T.

La figure 1B présente un exemple similaire de protubérance, avec deux profilés sensiblement perpendiculaires 30 et 31, connectés entre eux en forme de T. Le profilé 30 est pourvu de fenêtres 32 réparties circonférenciellement.

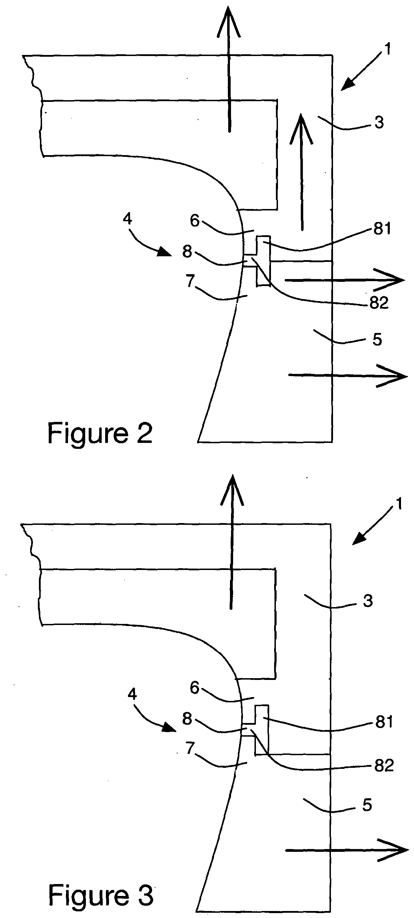

Comme on le voit aux figures 2 et 3, le moule 1 selon l'invention comprend une couronne 3 destinée au moulage de la bande de roulement d'un pneumatique et deux coquilles 5 pour le moulage des flancs. Un insert 4, est monté de façon amovible entre la couronne 3 et les coquilles 5. L'insert 4 comprend deux éléments concentriques 6 et 7, destinés à mouler une protubérance du pneumatique, soit un élément 6 radialement extérieur, associé à la couronne 3 et un élément 7, radialement intérieur, étant associé à la coquille 5. Chaque élément est conçu de façon à pouvoir effectuer le processus de démoulage en déplaçant les éléments 6 et 7 tel qu'indiqué par les flèches des figures 2 et 3, c'est à dire radialement extérieurement pour l'élément 6 de couronne et axialement extérieurement pour l'élément 7 de coquille.

Une rainure 8 est prévue du côté flanc de l'insert. Cette rainure libère le volume requis pour former une protubérance complexe sur le flanc du pneumatique produit au moyen de ce moule. Le profil et les dimensions de la rainure sont prévus en fonction de ceux de la protubérance du pneumatique à mouler. La rainure 8 de protubérance complexe comprend une zone ou secteur distal 81, espacé du flanc, et une zone ou secteur de connexion 82 avec le flanc du pneumatique. Dans cet exemple, les deux secteurs sont sensiblement perpendiculaires, avec un agencement en forme de «T».

Sur ces figures, on observe aisément tant le profil que l'emplacement de la rainure 8. La rainure 8 et l'insert 4 sont avantageusement concentriques.

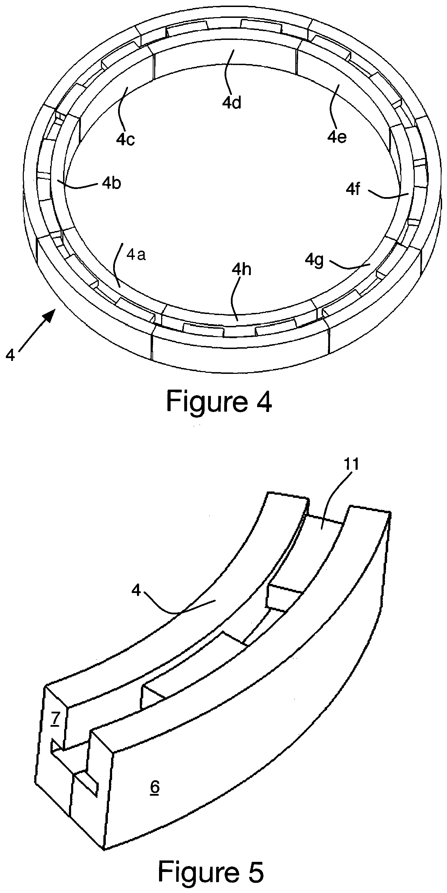

Tel que montré dans l'exemple de réalisation de la figure 4, l'insert 4 est avantageusement formé de plusieurs parties d'insert 4a à 4h alignées angulairement les unes à la suite des autres de façon à former un anneau aux formes et dimensions adaptées pour positionnement entre les deux portions de moules séparées par ce dernier.

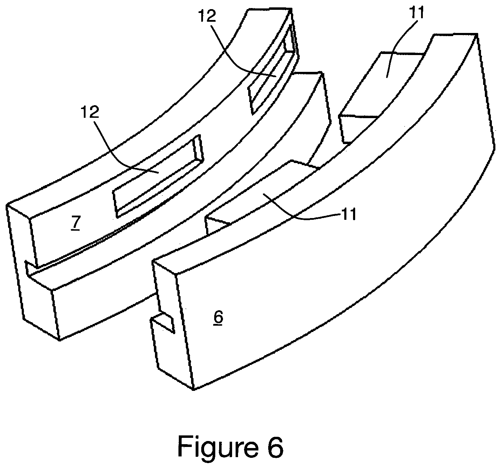

Les figures 5 et 6 montrent la rainure 8 interrompue à intervalles réguliers par des projections 11 réparties angulairement le long de la circonférence de l'insert 4. Ces projections 11 s'étendent radialement intérieurement à partir de l'élément 6 vers des fenêtres 12 de formes et dimensions correspondantes prévues sur l'élément 7 en alignement avec les projections 11.

Dans une variante de réalisation non illustrée, l'interface entre les deux sections d'insert produit une zone de jonction avec une surface de contact. Un pont ou élément de jonction permet de fixer entre elles deux parties voisines de l'insert. Le pont est avantageusement prévu dans la zone centrale de surface de contact. En variantes, plusieurs ponts peuvent être prévus. Le profil et la surface des ponts peuvent varier selon les modes de réalisation. Les ponts sont avantageusement prévus lors de la fabrication de l'insert, en particulier dans le cas où l'insert est réalisé par frittage laser. Pour changer une partie d'insert, le ou les ponts reliant les parties concernées sont cassés ou coupés. Même si les parties sont séparables par cassure des ponts lorsque l'insert est hors du moule, le montage dans le moule, de préférence avec serrage, confère une rigidité suffisante pour pouvoir effectuer les opérations de moulage sans risque de cassure de ponts.

Les Figures et leurs descriptions faites ci-dessus illustrent l'invention plutôt qu'elles ne la limitent. En particulier, l'invention et ses différentes variantes viennent d'être décrites en relation avec un exemple particulier dans lequel la rainure est en forme de « T ».

Néanmoins, il est évident pour un homme du métier que l'invention peut être étendue à d'autres modes de réalisation dans lesquels en variantes, on prévoit des rainures avec d'autres formes, tel que des rainures en forme de « Y » ou de « Γ », etc.

Les signes de références dans les revendications n'ont aucun caractère limitatif. Les verbes « comprendre » et « comporter » n'excluent pas la présence d'autres éléments que ceux listés dans les revendications.

## Revendications

1. Moule (1) pour la vulcanisation et le moulage d'un pneumatique, ce pneumatique comprenant une bande de roulement délimitée par deux flancs dont au moins un est pourvu d'une protubérance complexe, le moule comprenant une couronne (3) destinée au moulage de la bande de roulement du pneumatique et deux coquilles (5) pour le moulage des flancs, le moule comprenant un insert annulaire (4), **caractérisé en ce que** cet insert (4) sépare le moule en au moins.deux portions, soit une portion de couronne (3), et une portion de coquille (5) dans la zone radialement inférieure des flancs, ledit insert (4) comportant deux éléments concentriques adjacents (6, 7), destinés à mouler ladite protubérance complexe, soit un élément radialement extérieur (6), associé à la couronne (3) et un élément radialement intérieur (7) étant associé à la coquille (5).

2. Moule selon la revendication 1, **caractérisé en ce que** l'insert comprend une rainure (8) concentrique à l'insert, et **en ce que** la zone d'interface entre les deux éléments concentriques adjacents (6, 7) chemine par un des bords de la rainure (8).

3. Moule selon la revendication 2 , **caractérisé en ce que** la rainure (8) est pourvue d'un profil avec une zone distale (81) suivie d'une zone plus étroite de connexion (82) entre la protubérance et le flanc du pneumatique.

4. Moule selon l'une des revendications précédentes, **caractérisé en ce que** l'élément (6) est mobile radialement extérieurement avec la couronne (3) du moule lors du démoulage.

5. Moule selon l'une des revendications précédentes, **caractérisé en ce que** l'élément (7) est mobile axialement extérieurement avec une coquille (5) du moule lors du démoulage.

6. Moule selon l'une des revendications précédentes, **caractérisé en ce que** l'insert (4) est formé de plusieurs parties d'insert (4a-4h) positionnées les unes à la suite des autres pour constituer un anneau.

7. Moule selon la revendication 6 lorsqu'elle dépend de la revendication 2, **caractérisé en ce qu'**au moins une partie d'insert (4a) est réalisée par frittage laser, ladite partie d'insert comportant tout ou partie de la rainure (8) de l'insert (4).

8. Moule selon l'une des revendications 2 à 7, **caractérisé en ce que** la rainure (8) est interrompue à intervalles réguliers par des projections (11) réparties angulairement le long de la circonférence de l'insert (4).

9. Moule selon la revendication 8, dans lequel les projections (11) s'étendent radialement intérieurement de l'élément (6) vers des fenêtres (12) de formes et dimensions correspondantes prévues sur l'élément (7) en alignement avec les projections (11).

## Patentansprüche

1. Gießform (1) zum Vulkanisieren und Gießen eines Luftreifens, wobei dieser Luftreifen ein Laufband umfasst, das von zwei Seitenflächen begrenzt ist, wovon wenigstens eine mit einem komplexen Vorsprung versehen ist, wobei die Gießform eine Krone (3), die zum Gießen des Laufbandes des Luftreifens bestimmt ist, und zwei Schalen (5) zum Gießen der Seitenflächen umfasst, wobei die Gießform einen ringförmigen Einsatz (4) aufweist, **dadurch gekennzeichnet, dass** dieser Einsatz (4) die Gießform in wenigstens zwei Abschnitte unterteilt, nämlich einen Kronenabschnitt (3) und einen Schalenabschnitt (5) in der radial unteren Zone der Seitenflächen, wobei der Einsatz (4) zwei benachbarte konzentrische Elemente (6, 7) aufweist, die dazu bestimmt sind, den komplexen Vorsprung zu gießen, nämlich ein radial äußeres Element (6), das der Krone (3) zugeordnet ist, und ein radial inneres Element (7), das der Schale (5) zugeordnet ist.

2. Gießform nach Anspruch 1, **dadurch gekennzeichnet, dass** der Einsatz eine zu dem Einsatz konzentrische Rille (8) aufweist und dass die Grenzflächenzone zwischen den beiden benachbarten konzentrischen Elementen (6, 7) durch einen der Ränder (8) verläuft.

3. Gießform nach Anspruch 2, **dadurch gekennzeichnet, dass** die Rille (8) mit einem Profil mit einer distalen Zone (81), gefolgt von einer schmaleren Verbindungszone (82) zwischen dem Vorsprung und der Seitenfläche des Luftreifens, versehen ist.

4. Gießform nach einem der vorhergehenden Ansprüche, **dadurch gekennzeichnet, dass** das Element (6) bei der Entnahme aus der Form mit der Krone (3) der Gießform radial auswärts beweglich ist.

5. Gießform nach einem der vorhergehenden Ansprüche, **dadurch gekennzeichnet, dass** das Element (7) bei der Entnahme aus der Form mit der Schale (5) der Gießform axial auswärts beweglich ist.

6. Gießform nach einem der vorhergehenden Ansprüche, **dadurch gekennzeichnet, dass** der Einsatz (4) aus mehreren Einsatzteilen (4a-4h) gebildet ist, die hintereinander positioniert sind, um einen Ring zu bilden.

7. Gießform nach Anspruch 6, wenn abhängig von Anspruch 2, **dadurch gekennzeichnet, dass** wenigstens ein Einsatzteil (4a) durch Sintern mittels Laser hergestellt wird, wobei das Einsatzteil die gesamte Rille (8) des Einsatzes (4) oder einen Teil hiervon aufweist.

8. Gießform nach einem der Ansprüche 2 bis 7, **dadurch gekennzeichnet, dass** die Rille (8) in regelmäßigen Intervallen durch Vorsprünge (11) unterbrochen ist, die in Winkelrichtung längs des Umfangs des Einsatzes (4) verteilt sind.

9. Gießform nach Anspruch 8, wobei sich die Vorsprünge (11) radial innerhalb des Elements (6) zu Fenstern (12) mit entsprechenden Formen und Abmessungen, die in dem Element (7) ausgerichtet auf die Vorsprünge (11) vorgesehen sind, erstrecken.

## Claims

1. Mould (1) for vulcanizing and moulding a tyre, this tyre comprising a tread delimited by two sidewalls, at least one of which is provided with a complex protuberance, the mould comprising a ring (3) intended for moulding the tread of the tyre and two shells (5) for moulding the sidewalls, the mould comprising an annular insert (4), **characterized in that** this insert (4) separates the mould into at least two portions, namely a ring portion (3) and a shell portion (5) in the radially lower region of the sidewalls, said insert (4) having two adjacent concentric elements (6, 7) that are intended to mould said complex protuberance, namely a radially outer element (6) associated with the ring (3), and a radially inner element (7) associated with the shell (5).

2. Mould according to Claim 1, **characterized in that** the insert comprises a groove (8) concentric with the insert, and **in that** the interface region between the two adjacent concentric elements (6, 7) passes through one of the edges of the groove (8).

3. Mould according to Claim 2, **characterized in that** the groove (8) is provided with a profile with a distal region (81) followed by a narrower connection region (82) between the protuberance and the sidewall of the tyre.

4. Mould according to one of the preceding claims, **characterized in that** the element (6) is movable radially outwards with the ring (3) of the mould during demoulding.

5. Mould according to one of the preceding claims, **characterized in that** the element (7) is movable axially outwards with a shell (5) of the mould during demoulding.

6. Mould according to one of the preceding claims, **characterized in that** the insert (4) is formed from a plurality of insert parts (4a-4h) that are positioned one after another so as to form an annulus.

7. Mould according to Claim 6, when it depends on Claim 2, **characterized in that** at least one insert part (4a) is produced by laser sintering, said insert part having all or part of the groove (8) in the insert (4).

8. Mould according to one of Claims 2 to 7, **characterized in that** the groove (8) is interrupted at regular intervals by projections (11) that are distributed angularly around the circumference of the insert (4).

9. Mould according to Claim 8, wherein the projections (11) extend radially inwards from the element (6) to windows (12) having corresponding shapes and dimensions that are provided on the element (7) in line with the projections (11).
